(19) Europäisches Patentamt
European Patent Office
Office européen des brevets

(11) **EP 2 949 624 A1**

(12) **EUROPEAN PATENT APPLICATION**
published in accordance with Art. 153(4) EPC

(43) Date of publication:
**02.12.2015 Bulletin 2015/49**

(51) Int Cl.:
*C01B 31/02* (2006.01)          *B82Y 30/00* (2011.01)
*C08K 3/04* (2006.01)           *C08L 1/08* (2006.01)
*C08L 101/00* (2006.01)

(21) Application number: **14743277.7**

(22) Date of filing: **24.01.2014**

(86) International application number:
**PCT/JP2014/000366**

(87) International publication number:
**WO 2014/115560 (31.07.2014 Gazette 2014/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **24.01.2013   JP 2013010843**

(71) Applicant: **Zeon Corporation
Tokyo 100-8246 (JP)**

(72) Inventor: **SONE, Atsushi
Tokyo 100-8246 (JP)**

(74) Representative: **Vossius & Partner
Patentanwälte Rechtsanwälte mbB
Siebertstrasse 3
81675 München (DE)**

(54) **CARBON NANOTUBE DISPERSION, METHOD FOR MANUFACTURING SAME, CARBON NANOTUBE COMPOSITION, AND METHOD FOR MANUFACTURING SAME**

(57)     A carbon nanotube dispersion liquid suppresses aggregation of carbon nanotubes and exhibits high dispersion stability. The carbon nanotube dispersion liquid includes carbon nanotubes, cellulose nanofibers, and a dispersion medium.

**Description**

TECHNICAL FIELD

This disclosure relates to a carbon nanotube dispersion liquid with excellent dispersibility, a method of manufacturing the same, a carbon nanotube composition, and a method of manufacturing the same.

BACKGROUND

Conventionally, a variety of methods have been examined for using a dispersant to obtain a dispersion liquid of carbon nanotubes (hereinafter also referred to as "CNTs") with excellent dispersion stability. For example, a water soluble sugar with a short molecular chain, such as carboxymethyl cellulose or sucrose (JP 2008-230935 A (PTL 1)) or an anionic surfactant such as sodium dodecyl sulfate (WO 2005/082775 (PTL 2)) has been used as a dispersant for CNTs.

Furthermore, in recent years, the use of cellulose nanofibers (hereinafter also referred to as "CNF") as an additive, such as fibrous reinforcing material, has been studied (JP 2008-208231 A (PTL 3), JP 2011-202010 A (PTL 4)). Cellulose nanofibers are cellulose fibers obtained from a biomass material such as plants, waste, or the like and have a diameter on the order of nanometers.

CITATION LIST

Patent Literature

PTL 1: JP 2008-230935 A
PTL 2: WO 2005/082775
PTL 3: JP 2008-208231 A
PTL 4: JP 2011-202010 A

It could be helpful to provide a carbon nanotube dispersion liquid that suppresses aggregation of carbon nanotubes and exhibits high dispersion stability, a method of manufacturing the same, a carbon nanotube composition, and a method of manufacturing the same.

SUMMARY

I provide a carbon nanotube dispersion liquid that includes carbon nanotubes, cellulose nanofibers, and a dispersion medium, a method of manufacturing the same, a carbon nanotube composition, and a method of manufacturing the same.

In the carbon nanotube dispersion liquid, the cellulose nanofibers are preferably fine cellulose fiber with a maximum fiber diameter of 1000 nm or less and a number average fiber diameter of 2 nm or more to 150 nm or less, a portion of hydroxyl groups of the fine cellulose fiber are preferably replaced by at least one functional group selected from a group consisting of a carboxyl group and an aldehyde group, and the fine cellulose fiber preferably has a cellulose type 1 crystal structure.

In the fine cellulose fiber, a sum of an amount of the carboxyl group and an amount of the aldehyde group is preferably 0.1 mmol/g or more to 2.2 mmol/g or less with respect to mass of the fine cellulose fiber.

The maximum fiber diameter of the fine cellulose fibers is preferably 500 nm or less, and the number average fiber diameter of the fine cellulose fibers is preferably 2 nm or more to 100 nm or less.

The maximum fiber diameter of the fine cellulose fiber is preferably 30 nm or less, and the number average fiber diameter of the fine cellulose fiber is preferably 2 nm or more to 10 nm or less.

In the fine cellulose fiber, an amount of the carboxyl group is preferably 0.1 mmol/g or more to 2.2 mmol/g or less with respect to mass of the fine cellulose fiber.

The BET specific surface area of the carbon nanotube is preferably 600 $m^2$/g or more.

The relationship $0.60 > 3\sigma/Av > 0.20$ is preferably satisfied, where Av is an average diameter of the carbon nanotube and $3\sigma$ is a diameter distribution of the carbon nanotube.

I also provide a method of manufacturing a carbon nanotube dispersion liquid, including: dispersing carbon nanotubes and cellulose nanofibers into a dispersion medium by dispersion treatment that brings about a cavitation effect.

In the method of manufacturing a carbon nanotube dispersion liquid, the dispersion treatment that brings about a cavitation effect is preferably at least one dispersion treatment selected from the group consisting of dispersion treatment

2

by using an ultrasonic wave, dispersion treatment using a jet mill, and dispersion treatment using high-shear stirring.

I also provide a carbon nanotube composition including a polymer blended into the above carbon nanotube dispersion liquid.

I also provide a method of manufacturing a carbon nanotube composition, including: mixing a carbon nanotube dispersion liquid obtained by the above method with a latex polymer.

The method of manufacturing a carbon nanotube composition preferably further includes coagulating by precipitating solid content in a mixture obtained in the mixing step.

DETAILED DESCRIPTION

Embodiments will be described below in detail. However, the following embodiments are in no way limiting.

(Carbon Nanotube Dispersion Liquid)

My carbon nanotube dispersion liquid includes carbon nanotubes. cellulose nanofibers, and a dispersion medium.

<Carbon Nanotubes (CNTs)>

Well-known single-walled or multi-walled CNTs may be used as the CNTs in my carbon nanotube dispersion liquid. Any CNTs may be used as nanocarbon material in this disclosure.

For CNTs in which the average diameter (Av) and the diameter distribution (3σ) satisfy the relationship 0.60 > 3σ/Av > 0.20. dispersion stability in a dispersion medium is difficult to achieve due to factors such as the effect of the van der Waals force thereof. When using CNF as the dispersant instead of a conventional dispersant such as dodecyldiphenyloxide sodium disulfonate, however, high dispersion stability can be achieved even with a small amount.

In CNTs that are particularly preferable in my carbon nanotube dispersion liquid, the average diameter (Av) and the diameter distribution (3σ) satisfy the relationship 0.60 > 3σ/Av > 0.20. The average diameter (Av) as used herein is the average value of the diameter (outer diameter) of 100 CNTs selected randomly and measured with a transmission electron microscope. The diameter distribution (3σ) as used herein is the value obtained by multiplying the standard deviation (σ) by three. The standard deviation in this disclosure refers to a sample standard deviation.

By using CNTs in which the average diameter (Av) and the diameter distribution (3σ) satisfy the relationship 0.60 > 3σ/Av > 0.20, it is possible to obtain a composition exhibiting excellent electrical conductivity even for a small amount of CNTs. From the perspective of properties of the resulting composition, the ratio of the diameter distribution to the average diameter (3σ/Av) more preferably satisfies the relationship 0.60 > 3σ/Av > 0.25 and even more preferably the relationship 0.60 > 3σ/Av > 0.50.

As the value of 3σ/Av is greater, the diameter distribution is larger. This diameter distribution is preferably a normal distribution. Although the value of the diameter distribution can be increased by, for example, combining a plurality of types of CNTs obtained with different production methods, it is difficult in such a case to obtain a normal distribution. In other words, in this disclosure, a single type of CNTs or a blend of a single type of CNTs with other CNTs in an amount that does not influence the diameter distribution of the single type of CNTs is preferably used.

Any CNTs satisfying the relationship 0.60 > 3σ/Av > 0.20 may be used. However. CNTs obtained by the super-growth method (hereinafter also referred to as "SGCNTs") disclosed in JP 4621896 B2 and JP 4811712 B2. both of which are incorporated herein by reference, are preferably used. SGCNTs are CNTs having a Radial Breathing Mode (RBM) peak in Raman spectroscopy. Note that there is no RBM in the Raman spectra of a multi-walled CNT with three or more layers.

In CNTs that are particularly preferable in the present disclosure, the BET specific surface area is 600 m$^2$/g or more. Specifically, a BET specific surface area of 600 m$^2$/g for CNTs that are mainly unopened and 1300 m$^2$/g for CNTs that are mainly opened are preferable, since such CNTs are highly effective in modifying the composition. Normally, the upper limit on the BET specific surface area is approximately 2500 m$^2$/g.

CNTs may have a functional group such as a carboxyl group or the like introduced on the surface. A functional group may be introduced by well-known oxidation treatment that uses hydrogen peroxide, nitric acid, or the like. CNTs with a functional group such as a carboxyl group introduced on the surface have higher dispersibility, and the added amount of CNF and/or the dispersion time can be reduced.

Furthermore, the CNTs may be single-walled or multi-walled, yet from the perspective of improving the electrical conductivity of a rubber composition manufactured using the CNTs, the CNTs preferably have between a single wall and five walls, with a single wall being more preferable.

<Cellulose Nanofibers (CNF)>

The CNF used in my carbon nanotube dispersion liquid is constituted by fine cellulose fibers obtained by fibrillating native cellulose, derived from plants or the like, down to a nanometer size (for example, see JP 2005-270891 A, JP 2008-150719 A, and JP 2010-104768 A, all of which are incorporated herein by reference). Unlike carboxymethyl cellulose or other such water soluble cellulose, CNF has a long molecular chain and is highly crystalline, forming a bundle of several dozen strands. Therefore, CNF is normally insoluble in water. CNF functions as a dispersant for CNT with respect to the dispersion medium. In this disclosure, stating that CNF is "insoluble" in water refers to 99.5 mass% or more being insoluble when 0.5 g of CNF is dissolved in 100 g of water at 25 °C.

The CNF used in my carbon nanotube dispersion liquid preferably has an aspect ratio of 10 or more to 1000 or less. Furthermore, the CNF used in my carbon nanotube dispersion liquid is constituted by fine cellulose fibers normally having a maximum fiber diameter of 1000 nm or less and a number average fiber diameter of 2 nm or more to 150 nm or less, preferably a maximum fiber diameter of 500 nm or less and a number average fiber diameter of 2 nm or more to 100 nm or less, and even more preferably a maximum fiber diameter of 30 nm or less and a number average fiber diameter of 2 nm or more to 10 nm or less. The term "maximum fiber diameter" as used in this disclosure refers to the maximum diameter among fiber diameters measured according to the method below for a plurality of fibers.

The maximum fiber diameter and number average fiber diameter are analyzed as follows. An aqueous dispersion of 0.05 mass% or more to 0.1 mass% or less of fine cellulose fibers in terms of solid content is prepared. The dispersion is then cast on a carbon membrane coated grid, which has been treated to be hydrophilic, to yield a TEM observation sample, and the sample is observed. In the case of including fibers with a large fiber diameter, the dispersion may be cast on glass, and an SEM image of the surface may be observed. Observation is made with an electron microscope image at a magnification of 5000x, 10000x, or 50000x in accordance with the size of the constituent fibers. At this time, when assuming axes of an arbitrary vertical and horizontal image width in the obtained image, the samples and observation conditions (magnification and the like) are set so that at least 20 or more fibers intersect the axes. Two vertical axes and two horizontal axes are randomly drawn on each observation image that satisfies these conditions, and the fiber diameter of fibers that cross the axes is visually scanned. A minimum of three non-overlapping surface portion images are observed with an electron microscope in this manner, and the value of the fiber diameter of fibers that each cross two axes is scanned (therefore, information on the fiber diameter of at least 20 fibers x 2 x 3 = 120 fibers is obtained). Using the fiber diameter data thus obtained, the maximum fiber diameter and number average fiber diameter are calculated.

In this disclosure, the case of the CNF maximum fiber diameter being greater than 1000 nm and the number average fiber diameter being greater than 150 nm is not preferable, because the CNT dispersion power decreases, and the transparency and barrier properties of a coating film obtained by using my carbon nanotube dispersion liquid decrease.

Such CNF is commercially available as Celish (Registered Trademark) manufactured by Daicel FineChem Ltd., BiNFi-s (Registered Trademark) manufactured by Sugino Machine Limited, or the like. The CNF in this disclosure is not limited, yet due to having excellent CNT dispersion power, it is preferable for example to use CNF that has an arbitrary substituent and is obtained by a fibrillation process, performed in the presence of an oxidation catalyst, such as TEMPO oxidized cellulose nanofibers disclosed in JP 2008-001728 A. which is incorporated herein by reference, or the like. CNF having such a substituent may, for example, be obtained as a dispersion by performing the oxidation step, purification step, and dispersion step described in detail below on native cellulose. The resulting dispersion may be used after being dried.

[Oxidation Step]

In the oxidation step, a dispersion liquid in which native cellulose is dispersed in water is first prepared. Native cellulose refers to purified cellulose that has been isolated from a cellulose biosynthesis system such as a plant, animal, or bacteria-producing gel. Specific examples include cellulose that has been isolated from coniferous wood pulp, deciduous wood pulp, cotton-based pulp such as cotton linter or cotton lint, non-wood-based pulp such as pulp from barley or bagasse pulp, BC, cellulose isolated from sea squirt, and cellulose isolated from sea grass, yet these examples are not limiting. The native cellulose is preferably subjected to treatment such as beating to increase the surface area, thereby increasing the reaction efficiency and increasing productivity. Furthermore, it is preferable to use "never-dried" native cellulose that has been stored in a continuously moist state after isolation and purification, since by doing so, bundles of microfibrils are in a state that easily allows for swelling, thereby improving reaction efficiency and reducing the number average fiber diameter after treatment for reducing the microfibrils in size.

The dispersion medium for the native cellulose in the reaction is water, and the native cellulose concentration in the aqueous reaction solution may be any concentration allowing for sufficient diffusion of the reagent. Normally, the concentration is approximately 5 % or less with respect to the weight of the aqueous reaction solution.

Many N-oxyl compounds that can be used as a cellulose oxidation catalyst have been reported (see "Nitroxide-mediated oxidation of cellulose using TEMPO derivatives: HPSEC and NMR analyses of the oxidized products" by I. Shibata and A. Isogai in "Cellulose" Vol. 10, 2003, pp. 335 to 341, incorporated herein by reference). In particular, TEMPO. 4-acetamido-TEMPO, 4-carboxy-TEMPO, and 4-phosphonoxy-TEMPO are preferable in terms of the reaction rate in water at normal temperature. These N-oxyl compounds are added to the aqueous reaction solution in a sufficient catalyst quantity, preferably in a range of 0.1 mmol/l to 4 mmol/l, more preferably in a range of 0.2 mmol/l to 2 mmol/l. TEMPO is an abbreviation for 2,2,6,6-tetramethylpiperidine-1-oxyl.

A co-oxidant such as hypohalous acids or their salts, halogenous acids or their salts, perhalic acids or their salts, hydrogen peroxide, perorganic acids, or the like may be used. Alkali metal hypohalite salts such as sodium hypochlorite and sodium hypobromite are preferred. In the case where sodium hypochlorite is used, promoting the reaction in the presence of an alkali metal bromide such as sodium bromide or the like is preferable in terms of reaction rate. The added amount of the alkali metal bromide may be approximately 1 to 40 molar times the amount of the N-oxyl compound, preferably approximately 10 to 20 molar times.

The pH of the aqueous reaction solution is preferably maintained in a range of approximately 8 to 11. The temperature of the aqueous solution may be anywhere from approximately 4 to 40 degrees. The reaction may take place at room temperature, and the temperature need not be controlled.

The amount of the carboxyl group necessary to obtain fine cellulose fibers suitable for use in my carbon nanotube dispersion liquid varies depending on the type of native cellulose, and as the amount of the carboxyl group is larger, the maximum fiber diameter and number average fiber diameter decrease after treatment for reduction in size. Accordingly, the degree of oxidation is preferably controlled by the added amount of co-oxidant and the reaction time so as to optimize the oxidation conditions in accordance with the type of native cellulose, thereby obtaining the target amount of the carboxyl group. In general, the added amount of co-oxidant is preferably selected from a range of approximately 0.5 mmol or more to 15 mmol or less for 1 g of native cellulose. The reaction is complete in approximately 5 min or more to 120 min or less, or 240 min or less at the longest.

[Purification Step]

In the purification step, compounds other than the reactant fiber and water included in the reaction slurry, such as unreacted hypochlorite, various by-products, and the like are removed from the system. Since the reactant fiber is normally not dispersed into individual nanofibers at this stage, however, a regular purification method, i.e. repeated water washing and filtering, is used to achieve a dispersion of highly pure (99 mass% or more) reactant fiber and water. The purification method in the purification step may use any device that can achieve the above-described goal, such as a method using centrifugal dehydration (for example, a continuous decanter). In a concentrated state, the resulting aqueous dispersion of reactant fiber has a solid content (cellulose) concentration in a range of approximately 10 mass% or more to 50 mass% or less. Considering dispersion into nanofibers in the subsequent step, a solid content concentration higher than 50 mass% is not preferable, since an extremely high energy would become necessary for dispersion.

[Dispersion Step]

Furthermore, dispersion treatment to disperse the reactant fiber (aqueous solution) impregnated with water, as obtained in the above-described purification step, in solvent is applied, thereby providing the CNF dispersion used in this disclosure.

Water is normally preferable as the solvent for the dispersion medium, yet a solvent other than water may be used in accordance with the purpose, including alcohols that are soluble in water (such as methanol, ethanol, isopropanol, isobutanol, sec-butanol, tert-butanol, methyl cellosolve, ethyl cellosolve, ethylene glycol, glycerin, or the like), ethers (such as ethylene glycol dimethyl ether, 1,4-dioxane, tetrahydrofuran, or the like), ketones (such as acetone, methyl ethyl ketone, or the like), N,N-dimethylformamide, N,N-dimethylacetoamide, dimethylsulfoxide, and the like. A mixture of any of these may also be used. Furthermore, when diluting and dispersing the above-described reactant fiber dispersion with solvent, attempting gradual dispersion by adding the solvent bit by bit efficiently yields a dispersion of nanofiber-level fibers. For ease of handling, dispersion conditions should be selected so that the state after the dispersion step is a viscous dispersion liquid or a gel form.

Any of a variety of known dispersers may be used as the disperser in the dispersion step. In particular, a device having a stronger beating power, such as a high-speed revolution homomixer, high-pressure homogenizer, ultrahigh-pressure homogenizer, ultrasonic disperser, beater, disc-type refiner, conical refiner, double disc-type refiner, bead mill, jet mill, wet atomizing device that causes ceramic balls or raw materials to collide and disperse by ultrahigh-pressure (such as the Star Burst manufactured by Sugino Machine Limited), or grinder is preferably used. The reason is that cellulose fibers in the reactant fiber state can be efficiently and highly down-sized.

The dispersion of fine cellulose fibers thus obtained may be used in my carbon nanotube dispersion liquid.

[Drying Step]

In the drying step, for example when the solvent for the dispersion of fine cellulose fibers obtained in the above-described dispersion step is water, a freeze-drying method may suitably be used, and when the solvent for the dispersion of fine cellulose fibers is a mixed solution of water and an organic solvent, drying with a drum dryer, or in some cases spray drying with a spray dryer, may be suitably used. By mixing, into the above-described dispersion of fine cellulose fibers, a compound that has an extremely high boiling point and that also has affinity for cellulose, such as a water-soluble polymer (polyethylene oxide, poly-vinyl alcohol, polyacrylamide, carboxymethyl cellulose, hydroxyethyl cellulose, hydroxypropyl cellulose, methyl cellulose, starch, natural gums, or the like) or sugar (glucose, fructose, mannose, galactose, trehalose, or the like) as a binder, it is possible to obtain fine cellulose fibers that can disperse as nanofibers again in solvent even with a general-purpose drying method such as a drum dryer or a spray dryer. In this case, the amount of binder added into the dispersion of fine cellulose fibers is preferably in a range of 10 mass% or more to 80 mass% or less with respect to the amount of the reactant fiber.

By mixing the cellulose fibers, which are formed by the fine cellulose fibers that aggregated in the drying step, again in a solvent (water, an organic solvent, or a solvent that is a mixture thereof) and adding an appropriate dispersion force (for example, by dispersing with the various dispersers that can be used in the above-described dispersion step), the cellulose fibers can be converted into a dispersion of fine cellulose fibers.

The CNF suitably used in my carbon nanotube dispersion liquid is preferably oxidized by a portion of hydroxyl groups of the cellulose being replaced by carboxyl groups or aldehyde groups, and the CNF preferably has a cellulose type I crystal structure. This means that the CNF contains fibers yielded by surface oxidation and reduction in size of a solid material of naturally-occurring cellulose having the type I crystal structure. In other words, in the biosynthesis process for native cellulose, almost without exception nanofibers referred to as microfibrils first form, then combine into many bundles to constitute a high-order solid structure. In order to use this principle to weaken the hydrogen bond between surfaces, which here is the driving force for strong cohesion between microfibrils, a portion of the cellulose is oxidized and replaced by an aldehyde group or a carboxyl group.

CNF can be identified as having the type I crystal structure by the presence of typical peaks at two positions, near $2\theta = 14°$ to $17°$ and near $2\theta = 22°$ to $23°$, in the diffraction profile obtained by wide-angle X-ray diffraction measurement of the CNF. Furthermore, introduction of the aldehyde group or the carboxyl group into the cellulose of the CNF can be confirmed by the presence, in a sample from which water has been completely removed, of absorption (at around 1608 $cm^{-1}$, specifically 1550 $cm^{-1}$ to 1800 $cm^{-1}$) caused by a carbonyl group in attenuated total reflection infrared spectroscopy (ATR). In particular, in the case of an acid-type carboxyl group (COOH), absorption is present at 1730 $cm^{-1}$ in the above measurement.

For the above-described reasons, the CNF suitably used in my carbon nanotube dispersion liquid can exist stably with a more minute fiber diameter as the sum of the amount of carboxyl group and aldehyde group present in the cellulose fiber is larger. By cellulose fiber with a minute fiber diameter being stably present in the dispersion liquid, the dispersibility of the CNTs can be even further improved. Specifically, in the CNF, the sum of the carboxyl group and the aldehyde group is preferably 0.1 mmol/g or more to 2.2 mmol/g or less with respect to the mass of the cellulose fiber. More specifically, for example when using wood pulp or cotton pulp as the cellulose fiber (in the case of cellulose fiber with a number average fiber diameter of less than 10 nm), if the sum of the amounts of the carboxyl group and the aldehyde group present in my fine cellulose fibers is 0.2 mmol/g or more to 2.2 mmol/g or less, preferably 0.5 mmol/g or more to 2.2 mmol/g or less, and even more preferably 0.8 mmol/g or more to 2.2 mmol/g or less with respect to the mass of the cellulose fiber, the cellulose has excellent stability as nanofibers. In the case of cellulose in which the number average fiber diameter of the microfibrils is relatively large, such as bacteria cellulose (BC) or cellulose extracted from sea squirt (in the case of cellulose fiber with a number average fiber diameter of 10 nm or more), if the sum of the amounts is 0.1 mmol/g or more to 0.8 mmol/g or less, preferable 0.2 mmol/g or more to 0.8 mmol/g or less, the cellulose has excellent stability as nanofibers. The case of the sum of the amounts being less than 0.1 mmol/g is not preferable, because there is little difference in physical properties from conventionally known cellulose fibers that have been reduced in size (for example, little effect of increased dispersion stability in the dispersion), and because the fibers may form bundles, thereby increasing the fiber diameter.

Furthermore, by introducing a carboxyl group into the cellulose fiber, an electric repelling force is generated between the cellulose fibers, increasing the tendency for the microfibrils to separate, without maintaining an aggregated state. Hence, the stability as nanofibers increases further. Specifically, in the CNF, the amount of the carboxyl group is preferably 0.1 mmol/g or more to 2.2 mmol/g or less with respect to the mass of the cellulose fiber. More specifically, for example in the case of wood pulp or cotton pulp (in the case of cellulose fiber with a number average fiber diameter of less than 10 nm), if the amount of the carboxyl group present in my fine cellulose fibers is 0.2 mmol/g or more to 2.2 mmol/g or less, preferably 0.4 mmol/g or more to 2.2 mmol/g or less, and even more preferably 0.6 mmol/g or more to 2.2 mmol/g or less with respect to the mass of the cellulose fiber, the cellulose has excellent stability as nanofibers. In the case of cellulose in which the fiber diameter of the microfibrils is relatively large, such as BC or cellulose extracted

6

from sea squirt (in the case of cellulose fiber with a number average fiber diameter of 10 nm or more), if the amount of the carboxyl group is 0.1 mmol/g or more to 0.8 mmol/g or less, preferably 0.2 mmol/g or more to 0.8 mmol/g or less, the cellulose has excellent stability as nanofibers.

The amount (mmol/g) of the aldehyde group and the carboxyl group in the cellulose with respect to the mass of the cellulose fibers is evaluated by the following method. Using a cellulose sample of which the dry weight has been measured accurately, 60 ml of a 0.5 mass% to 1 mass% slurry is prepared, and after controlling the pH to be approximately 2.5 with an aqueous 0.1 M hydrochloric acid solution, an aqueous 0.05 M sodium hydroxide solution is added dropwise for measurement of the electric conductivity. The measurement is continued until the pH of the solution reaches approximately 11. From the dripped amount of aqueous sodium hydroxide solution (V) consumed in the neutralization process with a weak acid where the change of the electric conductivity is gentle, the amount 1 of the functional group is determined using the following The amount 1 of the functional group indicates the amount of the carboxyl group.

$$\text{Amount 1 of Functional Group} \quad (\text{mmol/g}) = V \text{ (ml)} \times 0.05/\text{mass of cellulose (g)}$$

Next, the cellulose sample is further oxidized in an aqueous 2 % sodium hypochlorite solution, which has been controlled with acetic acid to have a pH of 4 to 5, for 48 hours at room temperature, and the amount 2 of the functional group is again determined with the above method. The amount of the functional group added by this oxidation (amount 2 of functional group - amount 1 of functional group) is calculated to obtain the amount of the aldehyde group.

In addition to having excellent miscibility with other materials and exhibiting an extremely strong effect of dispersion stability in hydrophilic media such as water, CNF that satisfies the above conditions is also effective as a gelling agent, since dispersion in water or in a hydrophilic organic solvent expresses a highly thixotropic nature and adopts a gel state depending on the conditions. Furthermore, addition of a small amount of the above CNF can improve the dispersibility of CNTs. The above CNF can also disperse CNTs in a short period of time.

When the CNF is provided as extremely fine fibers having, for example, a maximum fiber diameter of 30 nm or less and a number average fiber diameter of 3 nm or more to 10 nm or less, a dispersion into water or into a hydrophilic organic solvent in some cases becomes transparent. Forming a film of the CNF by papermaking or casting yields a high-strength material that has excellent heat resistance and extremely low thermal expansion. When my dispersion of fine cellulose fibers used as the source liquid for film formation is transparent, the resulting film is also transparent. This film also effectively functions as a coating layer for the purpose of imparting hydrophilicity.

Furthermore, when using the above CNF to form a composite with another material, such as a resin material, the CNF has excellent dispersibility in the other material, making it possible in suitable cases to provide a composite with excellent transparency. In the composite, when the above CNF also functions as strengthening filler and the fibers form a sophisticated network in the composite, then as compared to the resin alone, the composite is dramatically strengthened, while simultaneously inducing a dramatic reduction in the coefficient of thermal expansion. Furthermore, concomitant use with the above CNF causes CNTs and the CNF to form a network together, thus yielding a remarkable strengthening effect. The CNF also does not run the risk of bleeding out, as does a typically used low-molecular weight dispersant. Therefore, after forming a composite, the CNF need not be actively removed. The above CNF is also endowed with the amphipathic nature of cellulose and therefore also functions as, for example, an emulsifier or a dispersion stabilizer. In particular, the absolute value of the surface potential increases by having a carboxyl group in the fiber, and therefore it is expected that the isoelectric point (the concentration at which aggregation begins to occur when the ion concentration increases) will shift towards a lower pH. As a result, the effect of increased dispersion stability can be expected for a wider range of ion concentration conditions. Furthermore, since the carboxyl group forms a counterion with a metal ion and is therefore also effective as a metal ion scavenger or the like.

The amount of CNF is normally 0.1 times or more to 30 times or less, preferably 0.5 times or more to 25 times or less, and more preferably 1 time or more to 10 times or less the mass of CNTs. From the perspective of dispersion stability, if the amount of CNF exceeds 30 times the mass of CNTs, the dispersibility of the CNF decreases. The density of CNTs also decreases, preventing the performance of the CNTs from being sufficiently achieved. Conversely, if the amount of CNF is less than 0.1 times the mass of CNTs, the dispersibility of the CNTs becomes insufficient.

In the dispersion liquid, the concentration of CNTs is preferably 0.001 mass% or more to 10 mass% or less, and the concentration of CNF is preferably 0.01 mass% or more to 10 mass% or less.

<Dispersion Medium>

The dispersion medium used in my carbon nanotube dispersion liquid may be selected freely in accordance with use. An alcohol such as methanol or ethanol; a ketone such as acetone or methyl ethyl ketone; water; or another such polar solvent is preferable, since the effects of the CNF are advantageously achieved. Water is particularly preferable.

<Other>

In accordance with the purpose of use, a variety of additives may be included in my dispersion liquid. Examples of additives include an antioxidant, a thermal stabilizer, a light stabilizer, an ultraviolet absorber, a pigment, a coloring agent, a foaming agent, a surfactant, an antistatic agent, a flame retardant, a lubricant, a softener, a tackifier, a plasticizer, a mold release agent, a deodorizer, and perfume.

A carbon nanotube / cellulose fiber composite material may be obtained from my dispersion liquid in the following ways: forming a coating by applying the dispersion liquid to a substrate such as a film and drying; removing solvent directly from the dispersion liquid; or injecting the dispersion liquid in a poor solvent, precipitating the solid content, filtering, and drying.

(Method Of Manufacturing Carbon Nanotube Dispersion Liquid)

The method of manufacturing a carbon nanotube dispersion liquid is not limited. It suffices to add CNTs and CNF to a dispersion medium and perform dispersion treatment under a normal method. The order in which CNTs and CNF are added to the dispersion medium is not limited. Either may be added first, or both may be added simultaneously. If the pH of the CNF is two or less, the result becomes a gel that is difficult to disperse. Therefore, when manufacturing a dispersion liquid, the pH is preferably maintained above two. Examples of the dispersion treatment include a method to stir the dispersion liquid directly using a stirrer, a dispersion method that brings about a cavitation effect, and a dispersion method that brings about a crushing effect. A "dispersion method that brings about a cavitation effect" is a dispersion method that uses a shock wave generated as follows. When a high energy is applied to a liquid, a pressure difference occurs in the liquid, and air bubbles in a vacuum that occurs in a liquid burst, thereby generating a shock wave. By using this dispersion method, the CNTs can be dispersed in the dispersion medium without impairing the characteristics of the CNTs. Specific examples of dispersion treatment that brings about a cavitation effect is dispersion treatment using ultrasonic waves, dispersion treatment using a jet mill, and dispersion treatment using high-shear stirring. A more specific example is to use the Star Burst (Registered Trademark) manufactured by Sugino Machine Limited for dispersion treatment that brings about a cavitation effect. It is possible to use only one method for the dispersion treatment or to combine a plurality of dispersion treatment methods. The device used for dispersion treatment of the carbon nanotube dispersion liquid may be a conventionally known device.

The "dispersion method that brings about a crushing effect" is a method for evenly dispersing CNTs in the dispersion liquid while suppressing the occurrence of cavitation by applying a shear force to a coarse dispersion liquid obtained by adding CNTs and CNF to a dispersion medium, so as to crush and disperse CNT aggregates in the coarse dispersion liquid, and then applying back pressure to the dispersion liquid and cooling the dispersion liquid as desired. When applying back pressure to the dispersion liquid, the back pressure may be applied to the dispersion liquid by lowering pressure at once to atmospheric pressure, yet the pressure is preferably lowered over multiple steps. With this dispersion method, the CNTs can of course be dispersed evenly in the dispersion medium, and as compared to the above-described dispersion treatment that brings about a cavitation effect, damage to CNTs due to the shockwave when the air bubbles burst can be suppressed, making this dispersion method more advantageous in this respect.

In order to further disperse the CNTs in the coarse dispersion liquid by applying a shear force to the coarse dispersion liquid, a dispersion system including a disperser with the structure below, for example, may be used.

From the side where the coarse dispersion liquid flows in to the side where the coarse dispersion liquid flows out, the disperser is sequentially provided with a disperser orifice having an inner diameter d1, a dispersion space having an inner diameter d2, and a terminal section having an inner diameter d3 (where d2 > d3 > d1).

In this disperser, by passing through the disperser orifice, high-pressure (normally 10 MPa to 400 MPa, preferably 50 MPa to 250 MPa) coarse dispersion liquid that flows in is reduced in pressure while becoming a high flow rate fluid that then flows into the dispersion space. Subsequently, the high flow rate coarse dispersion liquid that has entered the dispersion space flows in the dispersion space at high speed, receiving a shear force at that time. As a result, the flow rate of the coarse dispersion liquid reduces, and the CNTs in the coarse dispersion liquid are dispersed well. A fluid at a lower pressure (back pressure) than the pressure of the in-flowing coarse dispersion liquid then flows out from the terminal section, yielding the dispersion liquid.

The back pressure of the dispersion liquid may be applied by applying a load to the flow of the dispersion liquid. For example, a desired back pressure may be applied to the dispersion liquid by providing the below-described multiple step-down device downstream from the disperser.

With this multiple step-down device, the back pressure of the dispersion liquid is lowered over multiple steps, so that when the dispersion liquid is ultimately released into atmospheric pressure, the occurrence of air bubbles in the dispersion liquid can be suppressed.

The disperser may be provided with a heat exchanger or a cooling liquid supply mechanism for cooling the dispersion liquid. The reason is that by cooling the dispersion liquid that is at a high temperature due to the application of a shear force in the disperser, the generation of air bubbles in the dispersion liquid can be further suppressed.

Instead of providing a heat exchanger or the like, the generation of air bubbles in the dispersion liquid can also be suppressed by cooling the coarse dispersion liquid in advance.

As described above, in this dispersion treatment that brings about a crushing effect, the occurrence of cavitation can be suppressed, thereby suppressing damage to the CNTs due to cavitation, which is sometimes a concern. In particular, damage to the CNTs due to the shockwave when the air bubbles burst can be suppressed. Additionally, adhesion of air bubbles to the CNTs and energy loss due to the generation of air bubbles can be suppressed, and CNTs with a large specific surface area can also be effectively dispersed evenly.

The effect of improving dispersibility by suppressing the adhesion of air bubbles to the CNTs is extremely large for CNTs with a large specific surface area, in particular CNTs with a specific surface area of 600 $m^2$/g or more. The reason is that as the specific surface area of the CNTs is larger and air bubbles adhere more easily to the surface of the CNTs, the dispersibility tends to lower when air bubbles form and adhere.

Examples of a dispersion system having the above structure include the product name "BERYU SYSTEM PRO" (manufactured by BeRyu Corporation). Dispersion treatment may be performed by using such a dispersion system and appropriately controlling the dispersion conditions.

(Carbon Nanotube Composition)

A carbon nanotube composition may be obtained by blending a polymer of a polymerizable monomer (also referred to simply as a polymer), in accordance with the purpose, into my dispersion liquid obtained as described above.

<Polymer of a Polymerizable Monomer>

The polymer that may be mixed in with my dispersion liquid is not restricted. Any polymer may be appropriately selected and used from among a variety of polymer materials, such as an elastomer, resin, or the like, to obtain the strengthening effect due to CNTs and CNF and the effect of providing conductivity due to CNTs. Examples of the polymer of a polymerizable monomer include a water-soluble polymer such as polyethylene glycol or poly-vinyl alcohol: natural rubber or any of a variety of synthetic rubber elastomers; resins (synthetic polymers); and the like.

The blending ratio of the polymer may be set freely in accordance with purpose, yet when using a composite as a conductive material, the amount of CNTs with respect to the polymer can be kept relatively low, since high conductivity is obtained by a synergistic effect between the CNTs and the CNF. It is inferred that high conductivity is obtained by a synergistic effect between the CNTs and the CNF for the following reason. First, since a typically used dispersant degrades the conductivity of CNTs, the conductivity of the resulting polymer material tends to reduce as the added amount of polymer increases. Producing a polymer material by blending in CNF that, when added in a small amount, can increase the dispersibility of CNTs allows for the conductivity of the CNTs in the resulting polymer material to be maintained high.

The polymer is preferably a macromolecular material (polymer) dispersed in a solvent to yield a dispersion liquid (latex) that is then mixed with my carbon nanotube dispersion liquid. Latex made of resin or elastomer, which are macromolecular materials, may be suitably used as the latex used in my carbon nanotube composition.

Examples of the resin include styrene resin, acrylic resin, methacrylic resin, organic acid vinyl ester resin, vinyl ether resin, halogen-containing resin, olefin resin, alicyclic olefin resin, polycarbonate resin, polyester resin, polyamide resin, thermoplastic polyurethane resin, polysulfone resin (such as polyether sulfone, polysulfone, and the like), polyphenylene ether resin (such as a polymer of 2,6-xylenol and the like), cellulose derivative (such as cellulose esters, cellulose carbamates, cellulose ethers, and the like), and silicon resin (such as polydimethylsiloxane, polymethylphenylsiloxane, and the like). Examples of the alicyclic olefin resin include (i) a cyclic olefin random copolymer disclosed in JP H05-310845 A and U.S. 5,179,171, (ii) a hydrogenated polymer disclosed in JP H05-97978 A and U.S. 5,202,388, and (iii) a thermoplastic dicyclopentadiene ring-opening polymer and a hydrogenated additive thereof disclosed in JP H11-124429 A (EP 1026189 A1). All of these documents are incorporated herein by reference.

Examples of the elastomer include acrylic nitrile-butadiene rubber (NBR), acrylic nitrile-isoprene rubber, acrylic nitrile-butadiene-isoprene rubber, styrene-butadiene rubber (SBR), butadiene rubber (BR), isoprene rubber (IR), natural rubber (NR), ethylene-propylene-diene rubber (EPDM), butyl rubber (IIR), and rubber having an unsaturated double bond, such as a partially hydrogenated additive of these elastomers. Examples of the partially hydrogenated additive include hydrogenated NBR and hydrogenated SBR. Each of these rubbers may be used independently, or two or more of these rubbers may be used in combination.

Examples of a method of producing latex for use in my method of manufacturing include (1) a method in which latex is obtained by emulsifying, in the presence of a surfactant, a resin dissolved in an organic solvent or an elastomer solution, and, as needed, removing the organic solvent and (2) a method in which latex is directly obtained by carrying out emulsion polymerization or suspension polymerization of monomers by which a resin or an elastomer is constituted.

When the latex is obtained with method (1), it is preferable to use a resin and an elastomer each of which is dissolvable in an organic solvent having a solubility parameter of 10 (cal/cm$^3$)$^{1/2}$ or less, because doing so yields a composition with high yield. The solubility parameter is a parameter proposed by Hildebrand and Scott, defined as the square root of the cohesive energy density and based on a regular solution in which an entropy change caused by mixing is approximately zero and an enthalpy change occurs. Representative solvent solubility parameters are illustrated in the "Polymer Handbook" (Third Edition).

Examples of the organic solvent having a solubility parameter of 10 (cal/cm$^3$)$^{1/2}$ or less include: aliphatic solvents such as butane, pentane, hexane, heptane, octane, cyclopentane, cyclohexane, decane, and dodecane: aromatic solvents such as toluene, propyl benzene, and benzonitrile; halogen solvents such as butyl chloride, amyl chloride, allyl chloride, and chlorotoluene; ketone solvents such as acetone, methyl ethyl ketone, diethyl ketone, di-isopropyl ketone, methyl isobutyl ketone, methyl hexyl ketone, diisobutyl ketone, butylaldehyde, propyl acetate, butyl acetate, and amyl acetate: ester solvents such as ethyl propionate, ethyl isobutyrate, and butyl butyrate; and ether solvents such as dimethyl ether, dihexyl ether, ethylene glycol dimethyl ether, and ethylene glycol diethyl ether.

The latex for use in my method of manufacturing is preferably a dispersion liquid of an elastomer, and is more preferably nitrile rubber, which is an elastomer having a nitrile structure or an aromatic ring structure. When an elastomer having a nitrile structure or an aromatic ring structure is used, the effect of modifying the resulting composition is high. This allows for high electrical conductivity even if the added amount of CNTs is small.

The above-described elastomer having a nitrile structure, such as acrylic nitrile-butadiene rubber (NBR), acrylic nitrile-isoprene rubber, acrylic nitrile-butadiene-isoprene rubber, and the like is a polymer or its hydride having a structural unit derived from an α,β-unsaturated nitrile and a structural unit derived from a conjugate diene. From the perspective of physical properties of the composition, the content of the nitrile structure on the elastomer is preferably 20 mass% or more, more preferably 25 mass% or more and 55 mass% or less, and even more preferably 25 mass% or more and 50 mass% or less. Note that the content of the nitrile structure is the ratio of the weight of an α,β-unsaturated nitrile-derived structural unit to the weight of the entire rubber. In accordance with the mill oven method of JIS K 6364, the content of the nitrile structure is obtained by measuring the amount of nitrogen generated, converting to the corresponding bonding amount based on the acrylonitrile molecular weight, and then taking the median of the value thus determined.

Examples of the α,β-unsaturated nitrile include an acrylic nitrile and a methacrylonitrile. Examples of the conjugate diene include conjugate dienes with a carbon number of 4 or more to 6 or less, such as 1,3-butadiene, isoprene, and 2,3-dimethylbutadiene.

Copolymerization of the α,β-unsaturated nitrile and the conjugate diene can be attained by, for example, emulsion polymerization with the use of an emulsifier such as alkyl benzene sulfonate. The elastomer having a nitrile structure may have a structural unit constituted by monomers that can be copolymerized with the α,β-unsaturated nitrile and the conjugate diene. Examples of such monomers include: aromatic vinyl such as styrene; α,β-unsaturated carboxylic acids such as maleic acid and fumaric acid; and α,β-unsaturated carboxylic esters such as diethyl maleate, monomethyl fumarate, and dibutyl itaconate. Each of these components may be used independently, or two or more of these components may be used in combination.

The elastomer having an aromatic ring structure is a polymer or its hydride having a structural unit derived from aromatic vinyl and a structural unit derived from a conjugate diene. The amount of aromatic vinyl structural units is, for example, 60 mass% or less and 5 mass% or more, and from the perspective of physical properties of the composition, is preferably 50 mass% or less and 10 mass% or more, and more preferably 40 mass% or less and 15 mass% or more.

Examples of the aromatic vinyl include styrene, α-methylstyrene, 2-methylstyrene. 3-methylstyrene, 4-methylstyrene, 2,4-diisopropylstyrene, 2,4-dimethyl styrene, 4-t-butylstyrene, 5-t-butyl-2-methylstyrene, N,N-dimethylamino methyl styrene, N,N-diethylamino methyl styrene, and vinylnaphthalene. Among these, styrene is particularly preferable. Each of these components may be used independently, or two or more of these components may be used in combination.

A large number of commercial products of such elastomers having a nitrile structure or an aromatic ring structure are known and may be used.

(Method of Manufacturing Carbon Nanotube Composition)

The type of solvent can be appropriately set when mixing a polymer into the carbon nanotube dispersion liquid manufactured in the above-described way. Among solvents, a dispersion liquid (latex) dispersed in water is preferably mixed into the carbon nanotube dispersion liquid.

The amount of CNT used in my method of manufacturing is, with respect to 100 mass parts of the polymer forming the latex, for example 0.01 mass parts or more to 10 mass parts or less, preferably 0.1 mass parts or more to 7 mass parts or less, and even more preferably 0.25 mass parts or more to 5 mass parts or less. Setting the amount of CNT to 0.01 mass parts or more guarantees good conductivity, whereas setting amount of CNT to 10 mass parts or less improves the fluidity of the composition, yielding good formability.

Any specific method for mixing the carbon nanotube dispersion liquid and the latex may be used, and it suffices to use a stirring method such that the carbon nanotube dispersion liquid and the latex are evenly mixed. The interval between performing the dispersion step to produce the carbon nanotube dispersion liquid and performing the mixing step to produce the carbon nanotube composition is preferably 48 hours or less, since a deterioration in the dispersibility of the CNTs over time can be prevented. Furthermore, the mixing step is preferably performed at a temperature of 15 °C or more to 40 °C or less, since the dispersion function of the dispersant, in particular the surfactant, can be achieved better.

Any specific method that mixes the carbon nanotube dispersion liquid and the latex may be used for the mixing step. For example, the carbon nanotube dispersion liquid and the latex may be placed in the same container and mixed by, for example, stirring appropriately. A conventionally known stirrer may be used, such as a stirring vane, a magnetic stirring device, a planetary mill, or the like. The duration of the stirring is more preferably 10 min or more to 24 hours or less.

By thus using a carbon nanotube dispersion liquid and latex, carbon nanotube aggregates can be reduced, and the resulting composition has the advantages of excellent conductivity and of a large rupture stress and resistance to rupture when pulled.

[Coagulating Step]

My method of manufacturing preferably further includes a coagulating step to precipitate the solid content in the mixture obtained in the mixing step.

In the coagulating step, it suffices to precipitate the solid content in the carbon nanotube dispersion liquid that has undergone the mixing step. The method of precipitating may be a method, known to a person skilled in the art, for precipitating latex. Examples of such a method include a method in which the mixture obtained in the mixing step is added to a water-soluble organic solvent, a method in which an acid is added to the mixture, and a method in which a salt is added to the mixture.

A solvent in which the polymer in the latex does not dissolve is preferably selected as the water-soluble organic solvent. Examples of such an organic solvent include methanol, ethanol, 2-propanol (also known as isopropyl alcohol), and ethylene glycol. Examples of the acid include well-known materials used for coagulating common latex, such as acetic acid, formic acid, phosphoric acid, and hydrochloric acid. Examples of the salt include well-known materials used for precipitating common latex, such as calcium chloride, sodium chloride, aluminum sulfate, and potassium chloride.

Among the above methods, a preferable method is one in which the mixture obtained in the mixing step is adjusted to pH 4 or more and pH 10 or less by use of an acid or alkaline pH adjuster as needed, with the organic solvent then being added. Such a method allows for highly efficient collection of the composition. The coagulating step is more preferably performed at a temperature of 15 °C or more to 40 °C or less.

[Drying Step]

My method of manufacturing may include a drying step to filter off and dry the coagulated substance obtained by precipitating the solid content in the coagulating step. The coagulated substance may be filtered off using a known method.

In the drying step, any method may be used, as long as the coagulated substance obtained by precipitating the solid content in the coagulating step is dried. For example, a method known to a skilled person in the art for drying a polymer may be used, such as warm-air drying or reduced-pressure drying. Conditions for the drying may be set as appropriate based on the water content and the like in accordance with the use of the composition to be obtained by the drying.

EXAMPLES

The following provides specific examples, yet this disclosure is not limited to these examples. Note that below, "%" and "parts" that represent amounts are mass standards, unless otherwise noted.

In the Examples and Comparative Examples, the volume conductivity and the dispersibility of the carbon nanotube dispersion liquid were evaluated with the following methods.

<Volume Conductivity>

The volume conductivity of the rubber composition produced using my carbon nanotube dispersion liquid was obtained by measuring the electrical characteristics of a 200 μm thick sheet using a resistivity meter 1 (manufactured by Mitsubishi Chemical Analytech Co., Ltd., product name: "Loresta (Registered Trademark) GP MCP-T610", probe ESP) or a resistivity meter 2 (manufactured by Mitsubishi Chemical Analytech Co.. Ltd., product name: "Hiresta (Registered Trademark) MCP-HT800", ring probe UR).

<Dispersibility of Carbon Nanotube Dispersion Liquid>

The carbon nanotube dispersion liquid obtained by dispersion treatment was visually observed, and the existence of a precipitate was confirmed (confirmation 1). Furthermore, the resulting carbon nanotube dispersion liquid was kept still at room temperature (23 °C) for 5 days, and the existence of a precipitate was then visually confirmed (confirmation 2). The evaluation criteria for dispersibility were as follows.

A: An evenly dispersed state was maintained, with no precipitate being confirmed in both confirmation 1 and confirmation 2.
B: Fine particles (diameter of 1 $\mu$m or more to 300 $\mu$m or less) were confirmed in confirmation 1, and a precipitate was confirmed in confirmation 2.
C: Coarse particles (diameter exceeding 300 $\mu$m) were confirmed in confirmation 1, and a precipitate was confirmed in confirmation 2.
D: A precipitate was visible in confirmation 1, and even dispersion was not attained. A precipitate was also observed in confirmation 2.

<Production Example 1: Synthesis of CNTs>

CNTs were obtained by use of the super-growth method disclosed in JP 4,621,896 B2 (such CNTs being abbreviated hereinafter as "SGCNT").
Specifically, SGCNT-1 were grown under the following conditions.

Carbon compound: Ethylene, feed rate of 50 sccm
Atmosphere (gas): Helium and hydrogen mixed gas, feed rate of 1000 sccm
Pressure: 1 atmospheric pressure
Moisture Vapor Addition Amount: 300 ppm
Reaction temperature: 750 °C
Reaction time: 10 min
Metallic Catalyst (amount): Iron thin film, thickness of 1 nm
Substrate: Silicon wafer

The SGCNT-1 thus obtained had a BET specific surface area of 1,050 $m^2$/g, and upon measuring with a Raman spectrometer, spectra of a Radial Breathing Mode (RBM) were observed in a low-wavenumber region of 100 $cm^{-1}$ to 300 $cm^{-1}$, which is characteristic of single-walled CNTs. The diameter of 100 randomly selected SGCNT-1 were also measured with a transmission electron microscope, yielding an average diameter (Av) of 3.3 nm, a diameter distribution ($3\sigma$) of 1.9, and ($3\sigma$/Av) of 0.58.

<Production Example 2: Synthesis of CNTs>

SGCNT-2 were obtained by a method similar to that of Production Example 1, except that the thickness of the iron thin film serving as the metallic catalyst was set to 5 nm. The SGCNT-2 thus obtained had a BET specific surface area of 620 $m^2$/g, and upon measuring with a Raman spectrometer, spectra of a Radial Breathing Mode (RBM) were observed in a low-wavenumber region of 100 $cm^{-1}$ to 300 $cm^{-1}$, which is characteristic of single-walled CNTs. The diameter of 100 randomly selected SGCNT-2 were also measured with a transmission electron microscope, yielding an average diameter (Av) of 5.9 nm, a diameter distribution ($3\sigma$) of 3.3. and ($3\sigma$/Av) of 0.56.

<Production Example 3: Synthesis of Cellulose Nanofiber Dispersion S1>

An amount corresponding to 2 g in dry weight of undried sulfurous acid-bleached soft wood pulp (mainly constituted by fibers having a fiber diameter exceeding 1000 nm), 0.025 g of TEMPO, and 0.25 g of sodium bromide were dispersed in 150 ml of water. Sodium hypochlorite was then added by adding an aqueous 13 mass% sodium hypochlorite solution so that the amount of sodium hypochlorite was 2.5 mmol relative to 1 g of the pulp, and the reaction was started. During the reaction, an aqueous 0.5 M sodium hydroxide solution was added dropwise to keep the pH at 10.5. The reaction was considered to have ended once a change in pH was no longer observed. After filtering the reaction product through a glass filter, washing with a sufficient amount of water and filtering were repeated 5 times to yield a reactant fiber impregnated with water having a solid content of 25 mass%.

Next, water was added to the reactant fiber to yield a 2 mass% slurry that was then treated for approximately 5 min in a rotary blade mixer. Due to the treatment, the viscosity of the slurry increased dramatically. Therefore, water was added gradually and dispersion treatment with the mixer was continued until the solid content concentration reached 0.15 mass%. Suspended matter was removed by centrifugal separation from the resulting dispersion of fine cellulose fibers, in which the cellulose concentration was 0.15 mass%. The concentration was then adjusted with water to yield a transparent and somewhat viscous dispersion S1 of fine cellulose fibers with a cellulose concentration of 0.1 mass%. A wide-angle X-ray diffraction image of a transparent film of cellulose obtained by drying the dispersion S1 showed that the dispersion S1 was constituted by cellulose having a cellulose type I crystal structure, and the presence of a carbonyl group was confirmed from the pattern in an ATR spectrum of the same cellulose film.

Even at 0.1 mass%, the dispersion S1 had an extremely high viscosity, and upon being placed between orthogonal polarization plates, birefringence was observed even in a still state, suggesting the possibility that minute fibers included in the dispersion liquid had a high crystalline orientation and that portions of the dispersion liquid self-organized to have an ordered structure. The fine cellulose fibers of the dispersion S1 were cast on a carbon membrane coated grid, which had been treated to be hydrophilic. From a TEM image negatively stained with 2 % uranyl acetate, it was clear that the dispersion S1 was structured from fibrous cellulose with a maximum fiber diameter of 10 nm and a number average fiber diameter of 6 nm.

The amount of aldehyde group and the amount of carboxyl group in the transparent film of cellulose obtained by drying the dispersion S1 evaluated with the above-described method were, with respect to the mass of the fine cellulose fibers, respectively 0.33 mmol/g and 0.99 mmol/g.

Hence, in the resulting dispersion S1 containing fine cellulose fibers, the maximum fiber diameter was 1000 nm or less, the number average fiber diameter was 2 nm or more to 150 nm or less, and a portion of the hydroxyl group of the cellulose fiber was replaced by at least one functional group selected from the group consisting of a carboxyl group and an aldehyde group. Furthermore, the fine cellulose fibers had a cellulose type I crystal structure, and the sum of the amounts of the carboxyl group and the aldehyde group was 0.1 mmol/g or more to 2.2 mmol/g or less with respect to the mass of the cellulose fiber.

<Production Example 4: Synthesis of Cellulose Nanofiber Dispersion H1>

Water was added to the sulfurous acid-bleached soft wood pulp (mainly constituted by fibers having a fiber diameter exceeding 1000 nm) used as the raw material for Production Example 3, and with similar treatment in a mixer as for the dispersion S1, a dispersion (H1) with 0.1 mass% was prepared. The dispersion H1 of Production Example 4. which contains cellulose fiber that has not gone through an oxidation step, was not suspended with only a machine process, and precipitation occurred.

<Production Examples 5, 6. 7: Synthesis of Cellulose Nanofiber Dispersions S2, S3. and S4>

The raw material in Production Example 3 was changed as follows: to refined, undried cotton lint (Production Example 5); to refined, undried bacteria cellulose (BC) produced with acetic acid bacteria (Production Example 6); and to refined, undried cellulose isolated from sea squirt (Production Example 7). The added amount of sodium hypochlorite with respect to the raw material cellulose was set to the same amount of 2.5 mmol/g as Production Example 3 in Production Example 5 and to 1.8 mmol/g in both Production Example 6 and Production Example 7. All other conditions were the same as Production Example 3. A transparent dispersion of 0.1 mass% fine cellulose fibers was thus obtained in each case. The dispersions of fine cellulose fibers with a cellulose concentration of 0.1 mass% obtained in Production Examples 5, 6, and 7 were respectively labeled dispersions S2, S3, and S4.

A transparent film of cellulose was obtained by drying each of the dispersions S2 to S4, and with the same method as for Production Example 3, it was confirmed that the dispersions had a cellulose type I crystal structure and a carbonyl group absorption band.

Using TEM observation to evaluate in the same way as Production Example 3 revealed that the maximum fiber diameter and number average fiber diameter of dispersions S2 to S4 were as follows: maximum fiber diameter of 15 nm and number average fiber diameter of 8 nm (S2), maximum fiber diameter of 90 nm and number average fiber diameter of 37 nm (S3), and maximum fiber diameter of 62 nm and number average fiber diameter of 22 nm (S4).

The amount of aldehyde group and the amount of carboxyl group in the transparent film of cellulose obtained by drying each of the dispersions S2 to S4 were as follows: 0.21 mmol/g and 0.67 mmol/g (S2), 0.01 mmol/g and 0.50 mmol/g (S3), and 0.03 mmol/g and 0.31 mmol/g (S4). It was confirmed that the dispersions S2 to S4 of fine cellulose fibers obtained from Production Examples 5 to 7 had a maximum fiber diameter of 1000 nm or less and a number average fiber diameter of 2 nm or more to 150 nm or less, and a portion of the hydroxyl group of the cellulose fiber was replaced by at least one functional group selected from the group consisting of a carboxyl group and an aldehyde group. It was also confirmed that the fine cellulose fibers had cellulose type I crystal structure, and that the sum of the amounts of the carboxyl group and the aldehyde group was 0.1 mmol/g or more to 2.2 mmol/g or less with respect to the mass of the cellulose fiber.

<Production Example 8: Synthesis of Cellulose Nanofiber Dispersion S5>

An amount corresponding to 2 g in dry weight of undried sulfurous acid-bleached soft wood pulp (mainly constituted by fibers having a fiber diameter exceeding 1000 nm), 0.032 g of TEMPO, and 0.20 g of sodium bromide were dispersed in 200 ml of water. Sodium hypochlorite was then added by adding an aqueous 13 mass% sodium hypochlorite solution so that the amount of sodium hypochlorite was 10 mmol relative to 1 g of the pulp, and the reaction was started. During the reaction, an aqueous 0.5 M sodium hydroxide solution was added dropwise to keep the pH at 10.5. The reaction was considered to have ended once a change in pH was no longer observed. After filtering the reaction product through a glass filter, washing with a sufficient amount of water and filtering were repeated 5 times to yield a reactant fiber impregnated with water having a solid content of 25 mass%.

Next, water was added to the reactant fiber to yield a 2 mass% slurry that was then treated for approximately 5 min in a rotary blade mixer. Due to the treatment, the viscosity of the slurry increased dramatically. Therefore, water was added gradually and dispersion treatment with the mixer was continued until the solid content concentration reached 0.15 mass%. The resulting dispersion of fine cellulose fibers, in which the cellulose concentration was 0.15 mass%, was subjected to ultrasonic waves for 2 min, and suspended matter was removed by centrifugal separation. The concentration was then adjusted with water to yield a transparent and somewhat viscous dispersion S5 of fine cellulose fibers with a cellulose concentration of 0.1 mass%. A wide-angle X-ray diffraction image of a transparent film of cellulose obtained by drying the dispersion S5 showed that the dispersion S5 was constituted by cellulose having a cellulose type I crystal structure, and the presence of a carbonyl group was confirmed from the pattern in an ATR spectrum of the same cellulose film.

Even at 0.1 mass%, the dispersion S5 had an extremely high viscosity, and upon being placed between orthogonal polarization plates, birefringence was observed even in a still state, suggesting the possibility that minute fibers included in the dispersion liquid had a high crystalline orientation and that portions of the dispersion liquid had an ordered structure. The fine cellulose fibers of the dispersion S5 were cast on a carbon membrane coated grid, which had been treated to be hydrophilic. From a TEM image negatively stained with 2 % uranyl acetate, it was clear that the dispersion S5 was structured from fibrous cellulose with a maximum fiber diameter of 8 nm and a number average fiber diameter of 4 nm.

The amount of aldehyde group and the amount of carboxyl group in the transparent film of cellulose obtained by drying the dispersion S5 evaluated with the above-described method were, with respect to the mass of the fine cellulose fibers, respectively 0.01 mmol/g and 1.74 mmol/g.

Hence, in the resulting dispersion S5 containing fine cellulose fibers, the maximum fiber diameter was 1000 nm or less, the number average fiber diameter was 2 nm or more to 150 nm or less, and a portion of the hydroxyl group of the cellulose fiber was replaced by at least one functional group selected from the group consisting of a carboxyl group and an aldehyde group. Furthermore, the fine cellulose fibers had a cellulose type I crystal structure, and the sum of the amounts of the carboxyl group and the aldehyde group was 0.1 mmol/g or more to 2.2 mmol/g or less with respect to the mass of the cellulose fiber.

<Example 1>

First, 0.008 g of the SGCNT-1 obtained in Production Example 1 and 16 g of the cellulose nanofiber dispersion S1 obtained in Production Example 3 (cellulose nanofiber concentration of 0.1 mass%) were placed into a 30 mL vial container and were subjected to dispersion treatment for 30 min with a desktop ultrasonic wave cleaner (product name: Bransonic (Registered Trademark), manufactured by Emerson Japan, Ltd.; the same holds hereinafter). No precipitate was visually confirmed, and even dispersion was attained.

Subsequently, after keeping the dispersion liquid still at room temperature (23 °C) for 5 days, no precipitate was visually confirmed, and the state of even dispersion was maintained. After keeping the dispersion liquid for 5 days, the dispersion liquid was added dropwise to a matrix of 1.8 g of modified acrylonitrile butadiene rubber (NBR) latex (produced by Zeon Corporation, product name: "Nipol (Registered Trademark) LX550L", solid content concentration of 45 mass%), which had been stirred with a stirrer, to yield a carbon nanotube-NBR liquid mixture.

The resulting liquid mixture was added dropwise to 36 g of an aqueous calcium chloride solution (concentration 35 mass%) that had been stirred with a stirrer, the resulting deposit was filtered out, and the result was thoroughly washed with distilled water and dried overnight at 110 °C under vacuum to yield a rubber composition.

The resulting rubber composition was vacuum pressed at 160 °C to yield a 200 μm thick sheet. The electrical characteristics of the sheet were measured with the resistivity meter 1 (manufactured by Mitsubishi Chemical Analytech Co., Ltd., product name: "Loresta (Registered Trademark) GP MCP-T610", probe ESP; the same holds hereinafter). The volume conductivity was $1.8 \times 10^{-4}$ S/cm. Table 1 lists the results.

<Example 2>

Treatment similar to that of Example 1 was performed, except that instead of SGCNT-1, the SGCNT-2 obtained in Production Example 2 was used. No precipitate was visually confirmed, and even dispersion was attained. Subsequently, after keeping the dispersion liquid still at room temperature (23 °C) for 5 days, no precipitate was visually confirmed, and the state of even dispersion was maintained.
As measured in the same way as in Example 1, the volume conductivity of the resulting rubber composition sheet was $1.0 \times 10^{-5}$ S/cm. Table 1 lists the results.

<Example 3>

Treatment similar to that of Example 1 was performed, except that instead of dispersion S1, dispersion S2 obtained in Production Example 5 was used. No precipitate was visually confirmed, and even dispersion was attained. Subsequently, after keeping the dispersion liquid still at room temperature (23 °C) for 5 days, no precipitate was visually confirmed, and the state of even dispersion was maintained.
As measured in the same way as in Example 1, the volume conductivity of the resulting rubber composition sheet was $7.7 \times 10^{-5}$ S/cm. Table 1 lists the results.

<Example 4>

Treatment similar to that of Example 1 was performed, except that instead of dispersion S1, dispersion S3 obtained in Production Example 6 was used. No precipitate was visually confirmed, and even dispersion was attained. However, fine particles were observed in the dispersion liquid. Subsequently, after keeping the dispersion liquid still at room temperature (23 °C) for 5 days, no precipitate was visually confirmed, and the state of even dispersion was maintained.
As measured in the same way as in Example 1, the volume conductivity of the resulting rubber composition sheet was $5.5 \times 10^{-5}$ S/cm. Table 1 lists the results.

<Example 5>

Treatment similar to that of Example 1 was performed, except that instead of dispersion S1, dispersion S4 obtained in Production Example 7 was used. No precipitate was visually confirmed, and even dispersion was attained. However, fine particles were observed in the dispersion liquid.
Subsequently, after keeping the dispersion liquid still at room temperature (23 °C) for 5 days, no precipitate was visually confirmed, and the state of even dispersion was maintained.
As measured in the same way as in Example 1. the volume conductivity of the resulting rubber composition sheet was $6.6 \times 10^{-5}$ S/cm. Table 1 lists the results.

<Example 6>

First, 0.15 g of the SGCNT-1 obtained in Production Example 1 and 300 g of the cellulose nanofiber dispersion S1 obtained in Production Example 3 (cellulose nanofiber concentration of 0.1 wt%) were placed into a 500 mL vial container and were subjected to dispersion treatment for 1 min with a desktop ultrasonic wave cleaner. Using a jet mill (product name: "Nano Jet Pal JN20", manufactured by JOKOH), the dispersion liquid was subjected to dispersion treatment (unit 24, discharge rate 300000, treated 5 times). No precipitate was visually confirmed, and even dispersion was attained.
Subsequently, after keeping the dispersion liquid still at room temperature (23 °C) for 5 days, no precipitate was visually confirmed, and the state of even dispersion was maintained. After keeping the dispersion liquid for 5 days, the dispersion liquid was added dropwise to 34 g of modified acrylonitrile butadiene rubber (NBR) latex (produced by Zeon Corporation, product name: "Nipol (Registered Trademark) LX550L", solid content concentration of 45 mass%), which had been stirred with a stirrer, to yield a carbon nanotube-NBR liquid mixture.
The resulting liquid mixture was added dropwise to 670 g of an aqueous calcium chloride solution (concentration 35 mass%) that had been stirred with a stirrer, the resulting deposit was filtered out, and the result was thoroughly washed with distilled water and dried overnight at 110 °C under vacuum to yield a rubber composition.
The resulting rubber composition was vacuum pressed at 160 °C to yield a 200 μm thick sheet. As measured in the same way as in Example 1, the volume conductivity of the resulting sheet was 7.4 × 10$^{-3}$ S/cm. Table 1 lists the results.

<Example 7>

The carbon nanotube dispersion liquid obtained by treatment similar to that of Example 1 was kept for 5 days and then added dropwise to 0.5 g of hydrogenated acrylonitrile butadiene latex (acrylonitrile/butadiene/methyl acrylate = 34:65:1 (mass ratio), hydrogenation rate of 90 %, solid content concentration of 39.8 mass%), which had been stirred with a stirrer, to yield a carbon nanotube-nitrile rubber liquid mixture.

The resulting liquid mixture was added dropwise to 30 g of an aqueous calcium chloride solution (concentration 35 mass%) that had been stirred with a stirrer, the resulting deposit was filtered out, and the result was thoroughly washed with distilled water and dried overnight at 110 °C under vacuum to yield a rubber composition.

The resulting CNT/rubber composite was vacuum pressed at 160 °C to yield a 200 μm thick sheet. As measured in the same way as in Example 1, the volume conductivity of the resulting sheet was 2.3 × 10$^{-5}$ S/cm. Table 1 lists the results.

<Example 8>

Treatment similar to that of Example 1 was performed, except that instead of SGCNT-1, multi-walled CNTs (MWCNT; produced by Nanocyl, product name: "NC7000"; BET specific surface area of 290 m$^2$/g) were used. No precipitate was visually confirmed, and even dispersion was attained.

Subsequently, after keeping the dispersion liquid still at room temperature (23 °C) for 5 days, no precipitate was visually confirmed, and the state of even dispersion was maintained.

The resulting rubber composition was vacuum pressed at 160 °C to yield a 200 μm thick sheet. The electrical characteristics of the sheet were measured with the resistivity meter 2 (manufactured by Mitsubishi Chemical Analytech Co., Ltd.. product name: "Hiresta (Registered Trademark) MCP-HT800", ring probe UR; the same holds hereinafter). The volume conductivity was 1.8 × 10$^{-10}$ S/cm. Table 1 lists the results.

<Example 9>

Treatment similar to that of Example 1 was performed, except that instead of SGCNT-1, HiPCO (produced by NanoIntegris Inc., BET specific surface area of 700 m$^2$/g) were used. No precipitate was visually confirmed, and even dispersion was attained.

Subsequently, after keeping the dispersion liquid still at room temperature (23 °C) for 5 days, no precipitate was visually confirmed, and the state of even dispersion was maintained.

The resulting rubber composition was vacuum pressed at 160 °C to yield a 200 μm thick sheet. As measured in the same way as in Example 8. the volume conductivity of the resulting sheet was 2.6 × 10$^{-8}$ S/cm. Table I lists the results.

<Example 10>

Treatment similar to that of Example 1 was performed, except that instead of dispersion S1, dispersion H1 obtained in Production Example 4 was used. No precipitate was visually confirmed, and even dispersion was attained. However, coarse particles were observed in the dispersion.

Subsequently, after keeping the dispersion liquid still at room temperature (23 °C) for 5 days, no precipitate was visually confirmed, and the state of even dispersion was maintained.

As measured in the same way as in Example 8, the volume conductivity of the resulting sheet was 3.0 × 10$^{-8}$ S/cm. Table 1 lists the results.

<Example 11>

First, 0.008 g of the SGCNT-1 obtained in Production Example 1 and 16 g of the cellulose nanofiber dispersion S5 obtained in Production Example 8 (cellulose nanofiber concentration of 0.1 mass%) were placed into a 30 mL vial container and were subjected to dispersion treatment for 30 min with a desktop ultrasonic wave cleaner (product name: Bransonic (Registered Trademark), manufactured by Emerson Japan. Ltd.; the same holds hereinafter). No precipitate was visually confirmed, and even dispersion was attained.

Subsequently, after keeping the dispersion liquid still at room temperature (23 °C) for 5 days, no precipitate was visually confirmed, and the state of even dispersion was maintained. After keeping the dispersion liquid for 5 days, the dispersion liquid was added dropwise to a matrix of 1.8 g of modified acrylonitrile butadiene rubber (NBR) latex (produced by Zeon Corporation, product name: "Nipol (Registered Trademark) LX550L", solid content concentration of 45 mass%), which had been stirred with a stirrer, to yield a carbon nanotube-NBR liquid mixture.

The resulting liquid mixture was added dropwise to 36 g of an aqueous calcium chloride solution (concentration 35 mass%) that had been stirred with a stirrer, the resulting deposit was filtered out, and the result was thoroughly washed with distilled water and dried overnight at 110 °C under vacuum to yield a rubber composition.

The resulting rubber composition was vacuum pressed at 160 °C to yield a 200 $\mu$m thick sheet. The electrical characteristics of the sheet were measured with the resistivity meter 1 (manufactured by Mitsubishi Chemical Analytech Co.. Ltd., product name: "Loresta (Registered Trademark) GP MCP-T610", probe ESP; the same holds hereinafter). The volume conductivity was $8.8 \times 10^{-3}$ S/cm. Table 1 lists the results.

<Comparative Example 1>

First, 0.008 g of the SGCNT-1 obtained in Production Example 1, 3.2 g of an aqueous solution of 0.5 mass% carboxymethyl cellulose (produced by Daicel FineChem Ltd., product name "CMC Daicel 1130"), and 12.8 g of distilled water were placed into a 30 mL vial container and were subjected to dispersion treatment for 30 min with a desktop ultrasonic wave cleaner. No precipitate was visually confirmed, and even dispersion was attained.

Subsequently, after keeping the dispersion liquid still at room temperature (23 °C) for 5 days, no precipitate was visually confirmed, and the state of even dispersion was maintained. After keeping the dispersion liquid for 5 days, the dispersion liquid was added dropwise to 1.8 g of modified acrylonitrile butadiene rubber (NBR) latex (produced by Zeon Corporation, product name: "Nipol (Registered Trademark) LX550L", solid content concentration of 45 mass%), which had been stirred with a stirrer, whereupon aggregated CNTs precipitated.

The liquid mixture in which precipitation was observed was added dropwise to 36 g of an aqueous calcium chloride solution (concentration 35 mass%) that had been stirred with a stirrer, the resulting deposit was filtered out, and the result was thoroughly washed with distilled water and dried overnight at 110 °C under vacuum to yield a rubber composition.

The resulting rubber composition was vacuum pressed at 160 °C to yield a 200 $\mu$m thick sheet. As measured in the same way as in Example 1, the values of the volume conductivity of the resulting sheet were scattered, measuring $2.2 \times 10^{-6}$ S/cm at a high location. Some locations could not be measured with the resistivity meter 1. Table 1 lists the results.

<Comparative Example 2>

First, 0.008 g of the SGCNT-1 obtained in Production Example 1, 0.133 g of an aqueous solution of 30 mass% dodecyldiphenyloxide sodium disulfonate (produced by Dow Chemical Company, product name "DOWFAX" (Registered Trademark) 2A1), and 15.867 g of distilled water were placed into a 30 mL vial container and were subjected to dispersion treatment for 30 min with a desktop ultrasonic wave cleaner. A precipitate was visually confirmed, and even dispersion was not attained. Accordingly, even when mixing with latex, it was not possible to obtain a rubber composition with CNTs evenly dispersed therein, and the volume conductivity of a sheet of the rubber composition could not be measured. Table 1 lists the results.

[Table 1]

| | | Example 1 | Example 2 | Example 3 | Example 4 | Example 5 | Example 6 | Example 7 | Example 8 | Example 9 | Example 10 | Example 11 | Comparative Example 1 | Comparative Example2 |
|---|---|---|---|---|---|---|---|---|---|---|---|---|---|---|
| Dispersion liquid composition | CNT | SGCNT-1 | SGCNT-2 | SGCNT-1 | SGCNT-1 | SGCNT-1 | SGCNT-1 | SGCNT-1 | NC7000 | HiPCO | SGCNT-1 | SGCNT-1 | SGCNT-1 | SGCNT-1 |
| | CNT dispersion | S1 | S1 | S2 | S3 | S4 | S1 | S1 | S1 | S1 | H1 | S5 | - | - |
| | Dispersant | - | - | - | - | - | - | - | - | - | - | - | CMC | 2A1 |
| CNT characteristics | BET specific surface area [m²/g] | 1050 | 620 | 1050 | 1050 | 1050 | 1050 | 1050 | 290 | 700 | 1050 | 1050 | 1050 | 1050 |
| | Av [nm] | 3.3 | 5.9 | 3.3 | 3.3 | 3.3 | 3.3 | 3.3 | 9.3 | 1.1 | 3.3 | 3.3 | 3.3 | 3.3 |
| | $3\sigma$ | 1.9 | 3.3 | 1.9 | 1.9 | 1.9 | 1.9 | 1.9 | 2.6 | 0.2 | 1.9 | 1.9 | 1.9 | 1.9 |
| | $3\sigma/Av$ | 0.58 | 0.56 | 0.58 | 0.58 | 0.58 | 0.58 | 0.58 | 0.28 | 0.18 | 0.58 | 0.58 | 0.58 | 0.58 |
| CNF characteristics | Maximum fiber diameter [nm] | 10 | 10 | 15 | 90 | 62 | 10 | 10 | 10 | 10 | - | 8 | - | - |
| | Number average fiber diameter [nm] | 6 | 6 | 8 | 37 | 22 | 6 | 6 | 6 | 6 | - | 4 | - | - |
| | Crystal type | 1 | 1 | 1 | 1 | 1 | 1 | 1 | 1 | 1 | 1 | 1 | - | - |
| | Carboxyl group [mmol/g] | 0.99 | 0.99 | 0.67 | 0.5 | 0.31 | 0.99 | 0.99 | 0.99 | 0.99 | - | 1.74 | - | - |
| | Aldehyde group [mmol/g] | 0.33 | 0.33 | 0.21 | 0.01 | 0.03 | 0.33 | 0.33 | 0.33 | 0.33 | - | 0.01 | - | - |
| | Carboxyl group aldehyde group [mmol/g] | 1.32 | 1.32 | 0.88 | 0.51 | 0.34 | 1.32 | 1.32 | 1.32 | 1.32 | - | 1.75 | - | - |

EP 2 949 624 A1

| | | Example 1 | Example 2 | Example 3 | Example 4 | Example 5 | Example 6 | Example 7 | Example 8 | Example 9 | Example 10 | Example 11 | Comparative Example 1 | Comparative Example2 |
|---|---|---|---|---|---|---|---|---|---|---|---|---|---|---|
| Dispersion treatment | | ultrasonic wave | ultrasonic wave | ultrasonic wave | ultrasonic wave | ultrasonic wave | jet mill | ultrasonic wave | ultrasonic wave | ultrasonic wave | ultrasonic wave | ultrasonic wave | ultrasonic wave | ultrasonic wave |
| Matrix | | NBR | NBR | NBR | NBR | NBR | NBR | HNBR | NBR | NBR | NBR | NBR | NBR | - |
| Evaluation item | Dispersibility of CNT dispersion liquid | A | A | A | B | B | A | A | A | A | C | A | A | D |
| | Volume conductivity [S/cm] | $1.8 \times 10^{-4}$ | $1.0 \times 10^{-5}$ | $7.7 \times 10^{-5}$ | $5.5 \times 10^{-5}$ | $6.6 \times 10^{-5}$ | $7.4 \times 10^{-3}$ | $2.3 \times 10^{-5}$ | $1.8 \times 10^{-10}$ | $2.6 \times 10^{-8}$ | $3.0 \times 10^{-8}$ | $8.8 \times 10^{-3}$ | $2.2 \times 10^{-6}$ scattered | unmeasurable |
| | Dispersibility after mixing with matrix | A | A | A | A | A | A | A | A | A | A | A | D | A |

CNT: Carbon nanotube
CNF: Cellulose nanofiber
CMC: Carboxymethyl cellulose
2A1: Dodecyldiphenyloxide sodium disulfonate
NBR: Modified acrylonitrile butadiene rubber
HNBR: Hydrogenated acrylonitrile butadiene latex

EP 2 949 624 A1

19

From these results, it is clear that when producing a carbon nanotube dispersion liquid, it is possible to maintain a high dispersibility similar to a conventional dispersion material by using cellulose nanofiber. Furthermore, by using cellulose fibers, it is clearly possible to obtain a carbon nanotube composition with higher volume conductivity than a carbon nanotube composition produced using a conventional carbon nanotube dispersion liquid.

## Claims

1. A carbon nanotube dispersion liquid comprising: carbon nanotubes, cellulose nanofibers, and a dispersion medium.

2. The carbon nanotube dispersion liquid of claim 1, wherein
   the cellulose nanofibers are fine cellulose fiber with a maximum fiber diameter of 1000 nm or less and a number average fiber diameter of 2 nm or more to 150 nm or less, and
   a portion of hydroxyl groups of the fine cellulose fiber are replaced by at least one functional group selected from a group consisting of a carboxyl group and an aldehyde group, and the fine cellulose fiber has a cellulose type I crystal structure.

3. The carbon nanotube dispersion liquid of claim 2, wherein in the fine cellulose fiber, a sum of an amount of the carboxyl group and an amount of the aldehyde group is 0.1 mmol/g or more to 2.2 mmol/g or less with respect to mass of the fine cellulose fiber.

4. The carbon nanotube dispersion liquid of claim 2 or 3, wherein the maximum fiber diameter of the fine cellulose fiber is 500 nm or less, and the number average fiber diameter of the fine cellulose fiber is 2 nm or more to 100 nm or less.

5. The carbon nanotube dispersion liquid of claim 4, wherein the maximum fiber diameter of the fine cellulose fiber is 30 nm or less, and the number average fiber diameter of the fine cellulose fiber is 2 nm or more to 10 nm or less.

6. The carbon nanotube dispersion liquid of any one of claims 2 to 5, wherein in the fine cellulose fiber, an amount of the carboxyl group is 0.1 mmol/g or more to 2.2 mmol/g or less with respect to mass of the fine cellulose fiber.

7. The carbon nanotube dispersion liquid of any one of claims 1 to 6, wherein a BET specific surface area of the carbon nanotube is 600 $m^2$/g or more.

8. The carbon nanotube dispersion liquid of any one of claims 1 to 7, wherein 0.60 > $3\sigma$/Av > 0.20, where Av is an average diameter of the carbon nanotube and $3\sigma$ is a diameter distribution of the carbon nanotube.

9. A method of manufacturing the carbon nanotube dispersion liquid of any one of claims 1 to 8, comprising: dispersing carbon nanotubes and cellulose nanofibers into a dispersion medium by dispersion treatment that brings about a cavitation effect.

10. The method of claim 9, wherein the dispersion treatment that brings about a cavitation effect is at least one dispersion treatment selected from the group consisting of dispersion treatment by using an ultrasonic wave, dispersion treatment using a jet mill, and dispersion treatment using high-shear stirring.

11. A carbon nanotube composition comprising: a polymer blended into the carbon nanotube dispersion liquid of any one of claims 1 to 8.

12. A method of manufacturing the carbon nanotube composition of claim 11, comprising: mixing a carbon nanotube dispersion liquid obtained with the method of claim 9 or claim 10 with a latex polymer.

13. The method of claim 12, further comprising: coagulating by precipitating solid content in a mixture obtained in the mixing step.

<div align="center">**INTERNATIONAL SEARCH REPORT**</div>

| International application No. |
|---|
| PCT/JP2014/000366 |

**A. CLASSIFICATION OF SUBJECT MATTER**
*C01B31/02*(2006.01)i, *B82Y30/00*(2011.01)i, *C08K3/04*(2006.01)i, *C08L1/08*(2006.01)i, *C08L101/00*(2006.01)i

According to International Patent Classification (IPC) or to both national classification and IPC

**B. FIELDS SEARCHED**

Minimum documentation searched (classification system followed by classification symbols)
C01B31/02, B82Y30/00, C08K3/04, C08L1/08, C08L101/00

Documentation searched other than minimum documentation to the extent that such documents are included in the fields searched
Jitsuyo Shinan Koho          1922–1996   Jitsuyo Shinan Toroku Koho   1996–2014
Kokai Jitsuyo Shinan Koho   1971–2014   Toroku Jitsuyo Shinan Koho   1994–2014

Electronic data base consulted during the international search (name of data base and, where practicable, search terms used)
JSTPlus/JMEDPlus/JST7580(JDreamIII)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2011-225820 A  (Teijin Ltd.),<br>10 November 2011 (10.11.2011),<br>claim 1; paragraph [0040]<br>(Family: none) | 1<br>2-13 |
| X<br>Y<br>A | Hirotaka KOGA et al., "Carbon Nanotube/ Cellulose Nanofibril Hybrid no Chosei to Kino Kaihatsu", Abstracts of the Annual Meeting of the Japan Wood Research Society, vol.62, 2012, K16-06-1445 | 1,2,9,10<br>7,11-13<br>3-6,8 |
| Y<br>A | JP 2012-164492 A  (Tokyo Institute of Technology),<br>30 August 2012 (30.08.2012),<br>claim 1; paragraphs [0030], [0033]<br>& US 2012/0264034 A1    & CN 102709573 A | 7<br>1-6,8-13 |

☒  Further documents are listed in the continuation of Box C.    ☐  See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>11 April, 2014 (11.04.14) | Date of mailing of the international search report<br>22 April, 2014 (22.04.14) |
|---|---|
| Name and mailing address of the ISA/<br>Japanese Patent Office | Authorized officer |
| Facsimile No. | Telephone No. |

Form PCT/ISA/210 (second sheet) (July 2009)

## INTERNATIONAL SEARCH REPORT

International application No.

PCT/JP2014/000366

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP 2012-240875 A (Asahi Glass Co., Ltd.),<br>10 December 2012 (10.12.2012),<br>claims 1, 2; paragraphs [0043], [0044]<br>(Family: none) | 11-13<br>1-10 |
| A | JP 2011-213500 A (CCI Corp.),<br>27 October 2011 (27.10.2011),<br>claims 1 to 3; paragraphs [0022], [0038] to<br>[0040]<br>(Family: none) | 1-13 |
| A | JP 2010-254546 A (Toray Industries, Inc.),<br>11 November 2010 (11.11.2010),<br>claims 1, 10; paragraph [0140]<br>& US 2012/0058889 A1    & EP 2404873 A1<br>& WO 2010/101205 A1    & TW 201038472 A<br>& KR 10-2011-0124764 A  & CN 102341345 A | 1-13 |
| A | JP 2012-236983 A (Nagoya University),<br>06 December 2012 (06.12.2012),<br>claims 1, 2; paragraph [0022]<br>(Family: none) | 1-13 |
| A | JP 2012-1626 A (The University of Tokyo),<br>05 January 2012 (05.01.2012),<br>claim 1; paragraphs [0087] to [0092]<br>(Family: none) | 1-13 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008230935 A
- WO 2005082775 A
- JP 2008208231 A
- JP 2011202010 A
- JP 4621896 B
- JP 4811712 B
- JP 2005270891 A
- JP 2008150719 A
- JP 2010104768 A
- JP 2008001728 A
- JP H05310845 A
- US 5179171 A
- JP H0597978 A
- US 5202388 A
- JP H11124429 A
- EP 1026189 A1

**Non-patent literature cited in the description**

- **I. SHIBATA ; A. ISOGAI.** Nitroxide-mediated oxidation of cellulose using TEMPO derivatives: HPSEC and NMR analyses of the oxidized products. *Cellulose,* 2003, vol. 10, 335-341
- Polymer Handbook